# EUROPÄISCHE PATENTSCHRIFT

(11) **EP 2 817 584 B1**
(45) Veröffentlichungstag und Bekanntmachung des Hinweises auf die Patenterteilung: **27.07.2016**
(21) Anmeldenummer: 13718081.6
(22) Anmeldetag: 20.02.2013
(51) Int. Cl.: G01B 5/012

(54) **KUGEL-SCHAFT-VERBINDUNG**
BALL-SHAFT CONNECTION
LIAISON SPHÈRE - TIGE

(30) Priorität: 20.02.2012 DE 102012003223
(43) Veröffentlichungstag der Anmeldung: 31.12.2014
(73) Patentinhaber: Carl Zeiss 3D Automation GmbH, 73431 Aalen (DE)
(72) Erfinder: RICHTER, Frank, 89522 Heidenheim (DE)
(74) Vertreter: Vossius & Partner Patentanwälte Rechtsanwälte mbB
(86) Internationale Anmeldenummer: PCT/DE2013/000089
(87) Internationale Veröffentlichungsnummer: WO 2013/123927

(56) Entgegenhaltungen:
- EP-A1- 1 024 341
- CH-A5- 644 688
- DE-A1- 10 040 756
- JP-A- 2000 292 114
- US-A1- 2003 084 584
- US-A1- 2006 000 101

## Beschreibung

Die vorliegende Erfindung betrifft das oberbegrifflich Beanspruchte und bezieht sich somit auf Taststifte für Koordinatenmessmaschinen.

Koordinatenmessmaschinen werden verwendet, um die Geometrie von Gegenständen genau zu erfassen. Dafür besitzt die Koordinatenmessmaschine einen Arm, an dem ein Taststift befestigt wird und der dann mit diesem Taststift zum Werkstück bewegt wird, um bei Kontakt zum Werkstück ein kontaktindikatives Signal zu erzeugen. Die geometrischen Abmessungen können dabei bestimmt werden, indem zugleich erfasst wird, wo sich der Arm bei Erzeugung des kontaktindikativen Signals befindet.

Dies kann z.B. durch eine Kalibrierung geschehen, indem zunächst ein bekannter Körper mit dem Taststift am Arm abgetastet wird bzw. damit bekannte Positionen angefahren werden und danach mit derselben Anordnung das Werkstück abgetastet wird. Genaue Messungen erfordern bei diesem Vorgehen, dass zwischen der Kalibrierung und der eigentlichen Messung des Werkstückes keine Veränderungen am Arm oder dem Tastmittel auftreten.

Solche Veränderungen können beispielsweise schon durch Temperaturschwankungen hervorgerufen sein, etwa, weil sich die Materialien des Testmittels durch Erwärmung ausdehnen. Um derartige Effekte zu vermeiden, werden bereits Tastmittel verwendet, die eine sehr niedrige Wärmedehnung besitzen; genauso treten Probleme auf, wenn sich das Tastmittel durch die Antastung des Werkstückes allmählich verändert, etwa weil es in kontinuierlicher Berührung ("scannend") über das Werkstück bewegt wird und damit am vorderen Ende Abrieb unterliegt oder Material von dem Werkstück abreibt; beides verändert einleuchtenderweise die Geometrie des Tastmittels und verfälscht so Messungen. Um diesen Effekt zu verringern, werden die Tastmittel an ihrem die Werkstücke berührenden Vorderende mit Tastspitzen versehen, die oft aus Rubin, Diamant oder anderen, besonders harten Materialien bestehen; auch diese Tastspitzenmaterialien erlauben eine hochpräzise Bearbeitung. Diese Tastspitzen werden in verschiedener Geometrie gefertigt, z. B. als Kugeln, Zylinder oder dergleichen, und fest auf einem - typisch armseitig mit Befestigungsgewinde versehenen - Schaft angebracht, mit welchem sie gewechselt werden können.

Die Messgenauigkeit ist aber nicht nur verringert, wenn der Taststift einem allmählichen Verschleiß unterliegt; auch eine eingetretene mechanische Beeinträchtigung der Tastmittel-Integrität wirkt sich negativ aus. Daher ist die Verbindung der verschiedenen Teile des Tastmittels von erheblicher Bedeutung für die Messung.

Für die Verbindung von Tastmittelteilen werden unterschiedliche Techniken eingesetzt. So werden der Gewindeadapter und der Schaft oftmals geklebt, gelötet oder geschrumpft; die Tastspitze und der Schaft werden dagegen in der Regel geklebt oder gelötet. Diese Stelle ist für mechanische Beschädigungen besonders anfällig. Ein Taststift für Koordinatenmessgeräte, bei welchem eine biegesteife Verbindung durch Spezial-Lot hergestellt werden kann, ist aus der DE 100 40 756 A1 bekannt.

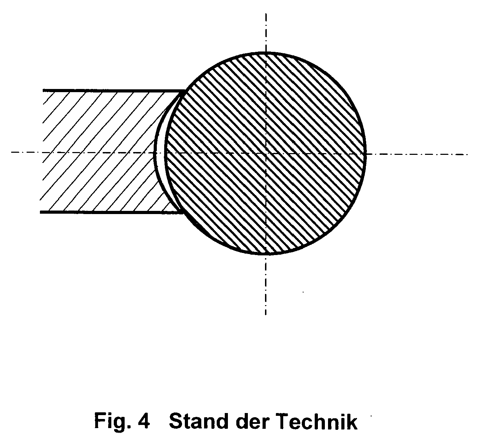

Im Stand der Technik bekannt ist es daher, zur Klebung einer Voll-Kugel an die Stirnseite eines zylinderförmigen Schafts eine zur Kugelform komplementäre Hohlkalotte oder eine kegelförmige Senkung in die Schaftstirn einzubringen (vgl. Fig.4), was den Vorteil bietet, dass die hochpräzise Kugel nicht bearbeitet werden muss; aufgrund der sehr kleinen Klebefläche sind die Klebekräfte aber gering.

Daher werden im Stand der Technik Kugeln auch dergestalt geklebt, dass in die Kugel eine zylinderförmige Bohrung eingebracht und am Schaft ein zylinderförmiger Zapfen vorgesehen wird, der einen geringfügig kleineren Durchmesser als die Kugelbohrung aufweist, so dass die Kugel mittels Kleber auf den Zapfen aufgeklebt werden kann (vgl. Fig. 5). Verwiesen wird insbesondere auf die EP 1024341 A1. Ein zylinderförmiger Zapfen an der Kugel eines Taststiftes ist auch bekannt aus der JP 200292114 A. Aus der US 2003/0084584 A1 ist eine Taststiftkugel bekannt, die eine Bohrung für den Schaft besitzt. Als Kugelmaterial sollte dabei Siliziumnitrid verwendet werden.

Ein Messtaster mit einer kugelförmigen Tastspitze aus hartem Material und einem Schaft aus Aluminiumoxydkeramik ist im Übrigen aus der CH 644 688 bekannt.

Weil dann, wenn wie beschrieben, im Stand der Technik in die Kugel eine zylinderförmige Bohrung eingebracht und am Schaft ein zylinderförmiger Zapfen vorgesehen wird, die Oberfläche des Zapfens um ein Vielfaches größer ist als die benetzte Fläche der Kugelkalotte, werden höhere Haftkräfte erreicht. Allerdings besteht ein Problem bei der Zapfenverbindung dahingehend, dass zwar die Klebefläche vergrößert und damit die Klebung verbessert ist, dass aber dann, wenn durch eine Beschädigung der Klebeverbindung eine Verkantung eintritt, Messungen fehlerbehaftet sind. So dreht sich womöglich die Kugel auf dem Schaft und erzeugt durch dieses Spiel ungewollte Abweichungen in den Messergebnissen. Daher sind, trotz eines vergleichsweise hohen Aufwandes bei der Einbringung der zylindrischen Bohrung in die Kugeln aus hartem Keramikwerkstoff oder dergleichen, die damit erzielbaren Resultate letztlich verbesserungswürdig.

Die Lösung dieser Aufgabe wird in unabhängiger Form beansprucht; bevorzugte Ausführungsformen finden sich in den abhängigen Ansprüchen.

Die vorliegende Erfindung schlägt somit gemäß Anspruch 1 ein Tastmittel für Koordinatenmessmaschinen mit einer eine Ausnehmung aufweisenden Tastspitze und einem mit einem Ansatz in die Ausnehmung eindringenden Schaft vor, bei welchem weiter vorgesehen ist, dass sich die Ausnehmung zum Tastspitzinneren hin verjüngt und der Schaft eine dazu komplementäre Ausbildung aufweist.

Ein Grundgedanke der Erfindung besteht darin, dass die Verjüngung einerseits eine große Klebefläche und somit hohe Haftkräfte ermöglicht, andererseits aber verhindert, dass die Tastspitze nach Beschädigung der Verklebung verkantet; vielmehr wird die Tastspitze sich bei einer Beschädigung der Verklebung ohne weiteres vom Schaft lösen. Dies wiederum ist hochgradig vorteilhaft, weil dies einerseits sofort visuell auffällt und weil andererseits, sofern Messungen ohne visuelle Kontrolle teilautomatisch oder vollautomatisch durchgeführt werden, durch die fehlende Tastspitze gegenüber der Messgenauigkeit extrem große Messfehler auftreten, so dass aufgrund der Überschreitung typischer Fertigungstoleranzen ein sofortiges automatisches Identifizieren des Defektes möglich und verhindert wird, dass mit einer beschädigten Messanordnung verfälschte Werte unerkannt aufgenommen werden.

Es ist vorteilhaft, wenn bei dem Tastmittel der Öffnungswinkel der Verjüngung größer als 5° ist, bevorzugt größer 15°. Dieser Öffnungswinkel ist typisch ausreichend, um bei einer Beschädigung der Klebung ein Abfallen der Tastspitze vom Schaft zu gewährleisten. Zugleich gewährleistet er eine gute Herstellbarkeit, z. B. durch Laserabtragung.

Es ist auch vorteilhaft, wenn bei dem Tastmittel die Verjüngung kegel- oder pyramidenförmig ist. Durch die kegel- oder pyramidenförmige Gestalt ist die Montage erleichtert. Zudem ist bei pyramiden- bzw. pyramidenstumpfförmiger Ausführung die Verbindung auch so formschlüssig, dass die Stabilität der Verbindung gegen Beschädigung erhöht ist und die Messgenauigkeit mit unbeschädigter Anordnung zu verbessern hilft.

Es ist möglich und vorteilhaft, wenn die Verjüngung im Tastspitzeninneren stumpf endet. Auf diese Weise ist die Verarbeitung vereinfacht, ohne die mit der Erfindung erzielbaren Vorteile wesentlich zu beeinträchtigen.

Es sei im Übrigen darauf hingewiesen, dass die Eintiefung bzw. Ausnehmung im Tastspitzenkörper insofern geringfügig größer sein kann als die entsprechende Komplementärformung, als der Dicke einer Klebstoffschicht (typisch nach Aushärtung) oder dergleichen Rechnung getragen wird.

Es ist weiter vorteilhaft, wenn bei dem Tastmittel die Ausnehmung als Pyramidenstumpf mit 4 bis 8 Facetten gebildet ist. Diese Zahl Facetten erlaubt eine einfache Fertigung und gewährleistet zugleich einen besonders guten Formschluss.

Es ist auch vorteilhaft, wenn bei dem Tastmittel der Ansatz des Schaftes in die sich verjüngende Ausnehmung der Tastspitze geklebt ist. Dass andere Verbindungsmöglichkeiten wie Löten oder dergleichen bestehen, sei aber erwähnt.

Gemäß Anspruch 7 wird Schutz weiter beansprucht für ein Verfahren zur Herstellung eines erfindungsgemäßen Tastmittels für Koordinatenmessmaschinen, bei welchem die Ausnehmung durch Laserablation erzeugt wird. Die Laserablation ist dank der erfindungsgemäßen Formgebung der Ausnehmung ohne weiteres anwendbar, ohne dass es einer Drehung des Tastspitzenkörpers um die Achse des Zylinders bei Abtragen zwingend bedarf. Vielmehr kann die Ausnehmung bei feststehendem Werkstück eingebracht werden. Sowohl der am Schaft vorgesehene Zapfen wie auch die diesem komplementäre Negativform in der Tastspitze, die typisch als Kugel gebildet sein wird, sind daher mittels Laserabtragen schnell und wirtschaftlich herstellbar.

Es ist vorteilhaft, wenn mit dem Verfahren ein Öffnungswinkel der Verjüngung erzeugt wird, der größer als der Konvergenzwinkel des zur Ablation verwendeten fokussierten Laserstrahls ist.

Es sei aber erwähnt, dass die Ausnehmung und/oder der komplementäre Ansatz auch unter Verwendung alternativer und/oder zusätzlicher Verfahren eingebracht werden. Beispielhaft genannt seien mechanische Verfahren, elektroerosive Verfahren, Ätzverfahren, Elektro- und/oder Ionenstrahl-Abtragen.

Die Erfindung wird im Folgenden nur beispielhaft anhand der Zeichnungen beschrieben. In dieser ist gezeigt durch
- Fig. 1a: ein Schnitt durch ein Tastmittel der vorliegenden Erfindung mit passgenauer Fertigung von Ansatz am Schaft und Ausnehmung in der Tastspitze;
- Fig. 1b: ein Schnitt durch ein Tastmittel der vorliegenden Erfindung mit geringfügig zu kurzem Ansatz am Schaft;
- Fig. 2a: der Tastspitzenkörper für ein erfindungsgemäßes Tastmittel von Fig. 1 im Schnitt und in perspektivischer Darstellung für eine Ausführungsform der Erfindung mit pyramidenstumpf-förmiger Ausnehmung;
- Fig. 2b: ein Schaft für die Ausführungsform der Erfindung von Fig. 2a;
- Fig. 3a: ein Tastspitzenkörper für ein erfindungsgemäßes Tastmittel im Schnitt und in perspektivischer Darstellung für eine Ausführungsform der Erfindung mit kegelstumpf-förmiger Ausnehmung;
- Fig. 3b: ein Schaft für die Ausführungsform der Erfindung von Fig. 3a;
- Fig. 4: ein Schnitt durch ein Tastmittel nach dem Stand der Technik;

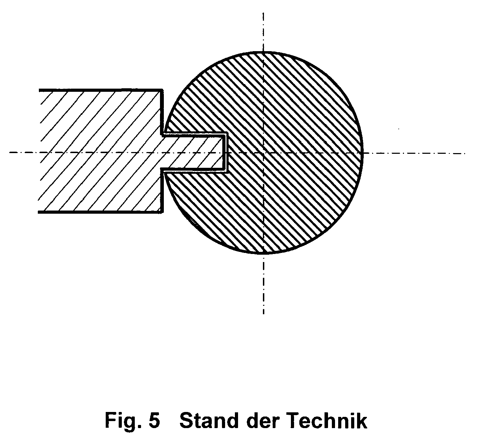

- Fig. 5: ein Schnitt durch ein Tastmittel nach dem Stand der Technik.

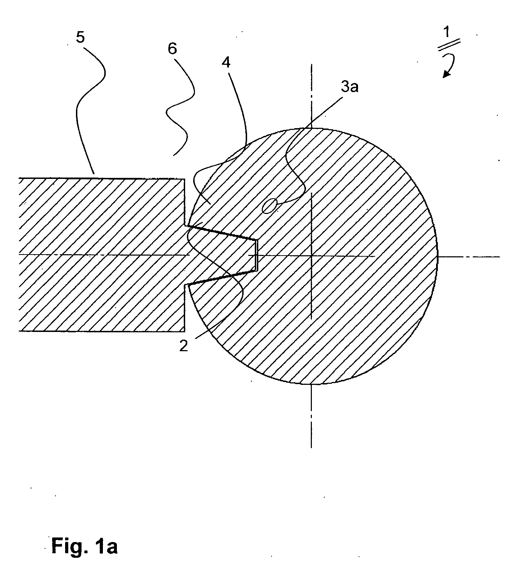

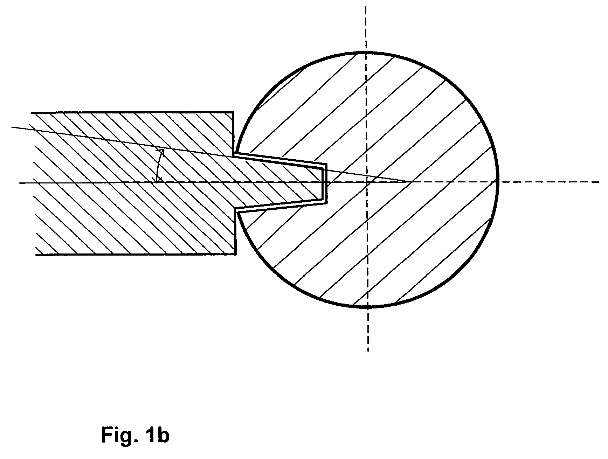

Nach Fig. 1 ist bei einem allgemein mit 1 bezeichneten Tastmittel 1 für Koordinatenmessmaschinen (nicht dargestellt) mit einer eine Ausnehmung 2 aufweisenden Tastspitze 3 und einem mit einem Ansatz 4 in die Ausnehmung 2 eindringenden Schaft 5 vorgesehen, dass sich die Ausnehmung 2 zum Tastspitzinneren 3a hin verjüngt und der Schaft 5 eine dazu komplementäre Ausbildung des Ansatzes 4 aufweist.

Das Tastmittel 1 ist im dargestellten Ausführungsbeispiel als Taststift mit einem geraden Schaft 5 und einer kugelförmigen Spitze 3 gebildet. Es kann sowohl für scannende wie auch für antastende Messungen verwendet werden. Die Übergangsanordnung vom Tastmittelschaft 5 zur Koordinatenmessmaschine (nicht dargestellt) ist nicht gezeigt und kann ohne weiteres in per se bekannter Weise gebildet sein.

Die Ausnehmung 2 ist vorliegend wie bevorzugt weniger tief als der Radius des Tastspitzenkörpers 3. So ist die mechanische Integrität des Tastspitzenkörpers 3 durch die Ausnehmung allenfalls wenig beeinträchtigt. Der Öffnungswinkel der Ausnehmung 2, der Übersichtlichkeit halber in Fig. 1b eingezeichnet als Winkel ALPHA, ist vorliegend so groß, das es bei Beschädigung der Verklebung zu einem Lösen des Tastspitzenkörpers vom Schaft kommt. Der Winkel beträgt dabei z. B. um etwa 10°.

Die Tastspitze 3 ist vorliegend aus Rubin (d.h. im wesentlichen monokristallinem Aluminiumoxid) als hartem Material gebildet; andere für Tastspitzenkörper übliche Materialien sind aber ebenfalls verwendbar; genannt seien ohne beschränkenden Ausschluss weiterer Materialien als bevorzugt insbesondere gesintertes Aluminiumoxid, Hartmetall, Saphir, Siliziumnitrid, Zirkonoxid und Diamant. Die Tastspitze 3 ist als hochpräzise geformte Kugel dargestellt, es sind aber einleuchtenderweise ohne Abweichung von der Erfindung auch andere Tastspitzenkörpergeometrien wie u. a. Kugelscheiben, Kegel, Zylinder einsetzbar.

Der Schaft 5 ist im vorliegenden Beispiel aus Hartmetall gebildet. Andere Schaftmaterialien, wie sie etwa im Stand der Technik gebräuchlich sind, sind jedoch ohne weiteres einsetzbar; explizit genannt seien zumindest Edelstahl, kohlefaserverstärkte Kunststoffe sowie Keramik.

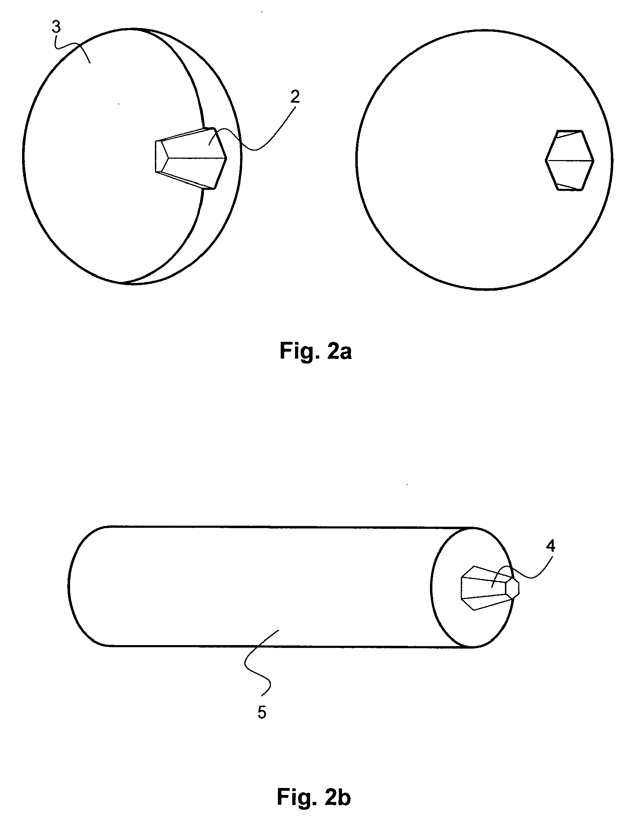

Die Ausnehmung 2 ist im Beispiel von Fig. 1a, vgl. hierzu die Darstellungen von Fig. 2a und b, als pyramidenstumpfförmige Ausnehmung gebildet mit hier sechs Facetten und Stirnfläche durch Laserablation gebildet. Am Schaft 5 ist eine komplementäre Gegenform vorgesehen, die von einem Vollmaterialrundstück aus dem Schaftmaterial ebenfalls durch Laserablation hergestellt ist.

Fig. 1 zeigt nun, dass, wie bevorzugt, Ausnehmung 2 im Tastspitzenkörper 3 und Ansatz 4 am Schaft 5 einander komplementär sind und so zusammenpassen, dass der Tastspitzenkörper nur am Ansatz 4 mit dem Schaft 5 in Berührung kommt, nicht jedoch mit der den Ansatz 4 am Schaft 5 umgebenden Schulter 6. Auf diese Weise kann eventuell im Übermaß eingebrachter Klebstoff bei Zusammenfügung besser aus der Ausnehmung 2 ausgedrängt werden und überdies ist eine Sichtkontrolle des Übergangbereiches verbessert. Fig. 1b veranschaulicht aber, dass auch bei geringfügig kürzerem Ansatz 4 am Schaft 5 noch eine einwandfreie Verbindung erhalten werden kann.

Die Anordnung wird hergestellt und verwendet folgt:
Zunächst werden ein Tastspitzenrohling und ein Schaftrohling bereitgestellt. In diese wird eine Ausnehmung 2 mit einem fokussierten Laserstrahl eingebracht bzw. ein Ansatz daran erstellt. Der Laserstrahl konvergiert auf den Fokus mit einem Winkel kleiner als 10°. Dann wird der Schaft durch Laserablation zur Bildung eines der Ausnehmung 2 komplementären Ansatzes bearbeitet.

Dass die Ausnehmung 2 und der komplementäre Ansatz alternativ und/oder zusätzlich auch mit anderen Verfahren eingebracht werden könnten, z. B. mit mechanischen Verfahren, elektroerosiven Verfahren, Ätzverfahren, Elektro- oder Ionenstrahlabtragen, sei erwähnt.

Danach werden Schaft und Tastspitzenkörper miteinander unter Verwendung geeigneter Klebstoffe verklebt.

Nach Montage der Anordnung an einer Koordinatenmessmaschine und Kalibration können antastende oder scannende Messungen durchgeführt werden. Dabei ist durch die Pyramidenstumpfform von Ansatz und Ausnehmung eine erhöhte Stabilität der Verklebung und damit hohe Maßhaltigkeit gewährleistet.

Wenn dabei die Klebung durch Stöße oder dergleichen beeinträchtigt wird, wird sich der Tastspitzenkörper ohne Verkanten vom Schaft lösen, so dass der Defekt unmittelbar erkennbar ist.

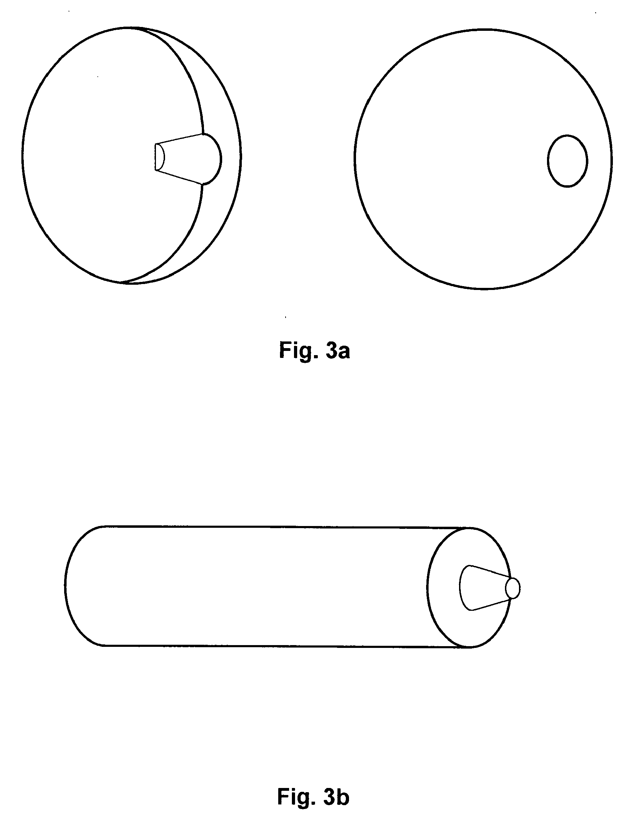

Während Fig. 2 eine Ausnehmung 2 im Tastspitzkörper 3 und einen komplementären Ansatz am Schaft 5 zeigt, die pyramidenstumpfförmig ist, wird durch Fig. 3 eine alternative Ausführung gezeigt, bei welcher die Ausnehmung als Negativform für einen Kegelstumpf gebildet ist (was vorliegend als "kegelstumpfförmige Ausnehmung" verstanden wird, wie aus dem Vorstehenden ersichtlich). Diese Anordnung bietet aufgrund des bei Schnitt durch die Achse kreisrunden Querschnitts des Kegelstumpfs nicht den Vorteil eines zusätzlichen Formschlusses.

## Patentansprüche

1. Tastmittel (1) für Koordinatenmessmaschinen mit
einer
eine Ausnehmung (2) aufweisenden
Tastspitze (3)
und
einem
mit einem Ansatz (4)
in die Ausnehmung (2) eindringenden
Schaft (5)
**dadurch gekennzeichnet, dass**
sich die Ausnehmung (2) zum Tastspitzinneteren (3a) hin verjüngt und
**der Ansatz (4) des Schafes (5)** eine dazu komplementäre Ausbildung aufweist.

2. Tastmittel (1) für Koordinatenmessmaschinen nach dem vorhergehenden Anspruch, **dadurch gekennzeichnet, dass** der Öffnungswinkel der Verjüngung größer als 5° ist, bevorzugt größer 15°.

3. Tastmittel (1) für Koordinatenmessmaschinen nach einem der vorhergehenden Ansprüche, **dadurch gekennzeichnet**, das die Verjüngung kegel- oder pyramidenförmig ist.

4. Tastmittel (1) für Koordinatenmessmaschinen nach dem vorhergehenden Anspruch, **dadurch gekennzeichnet, dass** die Verjüngung im Tastspitzeninneren (3a) stumpf endet.

5. Tastmittel (1) für Koordinatenmessmaschinen nach einem der vorhergehenden Ansprüche, **dadurch gekennzeichnet, dass** die Ausnehmung (2) als Pyramidenstumpf mit 4 bis 8 Facetten gebildet ist.

6. Tastmittel (1) für Koordinatenmessmaschinen nach einem der vorhergehenden Ansprüche, **dadurch gekennzeichnet, dass** der Ansatz (4) des Schaftes (5) in die sich verjüngende Ausnehmung (2) der Tastspitze geklebt ist.

7. Verfahren zur Herstellung eines Tastmittels (1) für Koordinatenmessmaschinen nach einem der vorhergehenden Ansprüche, **dadurch gekennzeichnet, dass** die Ausnehmung (2) durch Laserablation erzeugt wird.

8. Verfahren nach Anspruch 7, **dadurch gekennzeichnet, dass** ein Öffnungswinkel der Verjüngung hergestellt wird, der größer als der Öffnungswinkel des zur Ablation verwendeten fokussierten Laserstrahls ist.

## Claims

1. A probing means (1) for coordinate measuring machines comprising
a probe tip (3)
having a recess (2) and
a shaft (5)
penetrating into the recess (2)
with a shoulder (4),
**characterized in that**
the recess (2) tapers towards the interior of the probe tip (3a) and
the shoulder (4) of the shaft (5) has a construction which is complementary thereto.

2. The probing means (1) for coordinate measuring machines according to the preceding claim, **characterized in that** the opening angle of the taper is larger than 5°, preferably larger than 15°.

3. The probing means (1) for coordinate measuring machines according to any one of the preceding claims, **characterized in that** the taper is cone-shaped or pyramidal.

4. The probing means (1) for coordinate measuring machines according to the preceding claim, **characterized in that** the taper ends in a blunted manner in the interior of the probe tip (3a).

5. The probing means (1) for coordinate measuring machines according to any one of the preceding claims, **characterized in that** the recess (2) is formed as a truncated pyramid with 4 to 8 facets.

6. The probing means (1) for coordinate measuring machines according to any one of the preceding claims, **characterized in that** the shoulder (4) of the shaft (5) is bonded to the tapering recess (2) of the probe tip.

7. A method for manufacturing a probing means (1) for coordinate measuring machines according to any one of the preceding claims, **characterized in that** the recess (2) is made by laser ablation.

8. The method according to claim 7, **characterized in that** an opening angle of the taper is made which is larger than the opening angle of the focused laser beam used for ablation.

## Revendications

1. Moyen de palpage (1) pour des machines de mesure de coordonnées, avec une pointe de palpage (3) comportant un évidement (2) et une tige (5) pénétrant dans l'évidement (2) par un épaulement (4), **caractérisé en ce que** l'évidement (2) s'amincit vers l'intérieur (3a) de la pointe de palpage et **en ce que** l'épaulement (4) de la tige (5) a une forme complémentaire à celui-ci.

2. Moyen de palpage (1) pour des machines de mesure de coordonnées selon la revendication précédente, **caractérisé en ce que** l'angle d'ouverture de l'amincissement est supérieur à 5°, préférentiellement supérieur à 15°.

3. Moyen de palpage (1) pour des machines de mesure de coordonnées selon l'une des revendications précédentes, **caractérisé en ce que** l'amincissement a une forme conique ou pyramidale.

4. Moyen de palpage (1) pour des machines de mesure de coordonnées selon la revendication précédente, **caractérisé en ce que** l'amincissement a une extrémité émoussée à l'intérieur (3a) de la pointe de palpage.

5. Moyen de palpage (1) pour des machines de mesure de coordonnées selon l'une des revendications précédentes, **caractérisé en ce que** l'évidement (2) est formé comme tronc de pyramide avec 4 à 8 faces.

6. Moyen de palpage (1) pour des machines de mesure de coordonnées selon l'une des revendications précédentes, **caractérisé en ce que** l'épaulement (4) de la tige (5) est collé dans l'évidement (2) aminci de la pointe de palpage.

7. Procédé de fabrication d'un moyen de palpage (1) pour des machines de mesure de coordonnées selon l'une des revendications précédentes, **caractérisé en ce que** l'évidement (2) est réalisé par ablation laser.

8. Procédé selon la revendication 7, **caractérisé en ce qu'**un angle d'ouverture de l'amincissement est réalisé, lequel est supérieur à l'angle d'ouverture du faisceau laser focalisé utilisé pour l'ablation.
